# EUROPEAN PATENT APPLICATION

(11) **EP 1 035 350 A1**
(43) Date of publication of application: **13.09.2000**
(21) Application number: 99810226.3
(22) Date of filing: 12.03.1999
(51) Int. Cl.: F16F 7/08, F16F 15/073, F16F 15/02

(54) **Method and device for damping oscillations and vibrations of cables**

(71) Applicant: VSL International AG, CH-3421 Lyssach (CH)
(72) Inventor: Kovacs, Imre, 71384 Weinstadt (DE)
(74) Representative: BOVARD AG - Patentanwälte

(57) **Abstract**

A method, a device and a system for damping transversal oscillations and vibrations of tensioned cables are disclosed and claimed. The method comprises transmitting the damping forces created by the friction of a single first friction element (44), connected to the cable (10) and resiliently clamped between two second friction elements that are connected to a force receiving structure (14) or to the anchorage device of the cable, in a manner to allow for axial displacements of the cable. The forces are transmitted without any play or slippage.

## Description

### BACKGROUND OF THE INVENTION

### 1. Field of the Invention

This invention belongs to the technical field of constructions and especially to constructions using cables. The invention is related to a method and a device for damping oscillations and vibrations of cables, for example of stay cables.

Cable-stayed bridges, suspension bridges and other cable-supported or guided constructions have become known since more than 100 years. In the last decades, high steel towers have been erected, such as telecommunication towers and wind driven power stations, which must be anchored to a support such as the ground, a part of the construction structure, to another structure or even to one or more other cables, in order to ascertain their stability. Such a supporting will be designed in the following description by the term "force receiving structure".

The cables in such constructions, especially in cable-stayed and suspension bridges, are subjected to vibrations of the bridge and/or alternating lateral forces caused by wind and/or rain. It has been observed that these forces give rise to transverse oscillations and vibrations of the cables (see I. Kovacs, Zur Frage der Seilschwingungen und der Seildämpfung, Die Bautechnik 10/1982, p. 3-10); as a result, frequent cable damage in the region of the cable anchorages on the force receiving structure have occurred.

### 2. Description of the Prior Art

It has already been suggested to suppress the above indicated cable vibrations by providing cable vibration dampers. Several principles of damping have been used or proposed, such as neoprene, hydraulic dampers, damping by tuned mass systems, compression dampers and even eddy current brakes. However, all these devices are accompanied by serious drawbacks; thus, hydraulic and compression dampers have a low or ineffective action since the damping forces begin with very low values, near to zero, at the beginning of the vibration, and these forces are essentially proportional to the speed of the point to be dampened. This is also true for eddy current dampers. Tuned mass systems are too cumbersome and space-consuming, technically difficult to realize, and damp only one particular eigenfrequency. Furthermore, all these systems are in action even for very small movements of the cable and therefore, are more susceptible to wear and need more maintenance.

It has recently been suggested to use frictional forces for damping the cable vibrations in a cable-stayed bridge. However, the construction that uses a frictional element, connected to the cable, and a cooperating friction plate connected to the cable anchorage, did not yield the expected effective damping since the values of frictional forces were subjected to variations due to the longitudinal movement of the cable at the site of the friction damper. To the contrary, systems which allowed for longitudinal cable movements had some slip before they became effective.

All dampers known until now suffer from the general disadvantage that the damping force cannot be completely and correctly transmitted from the vibrating cable to the force receiving structure without slip and/or play, or they do not allow for a longitudinal movement of the cable, or both. In principle, friction brakes would be preferred as dampers since the physical behavior of the brake is advantageous. When an increasing force is applied to the friction device that comprises two parts in frictional engagement, there is no relative movement of the two parts until the limit value of the static friction is reached. When the applied force further increases, the frictional parts move relative to one another with a significant reaction. However, such friction brakes, applied to cables, will not work correctly when the clamping force on the friction elements will not remain reasonably constant.

### SUMMARY OF THE INVENTION

Therefore, it is the first and major object of this invention to provide a new and useful method for damping oscillations and vibrations of cables which does not show the drawbacks of the known dampers and which allows a transmission free from play and free from slippage of the forces from the oscillating cable to a force receiving structure.

Another important object of the invention is a method of the above depicted kind wherein the damping of the cable oscillations remains constant when the position of the damper is displaced in a longitudinal direction due to a corresponding movement of the cable.

Still another object of the invention is to provide a damping device for implementing the above described method.

The invention further contemplates a damper system wherein at least two damping devices are combined, in order to effectively damp any vibration or oscillating movement of the cable, thus reliably avoiding any damage of the cable near its anchorage device.

Now, these objects and still others are achieved by the method of the invention which comprises the transmission of transverse cable oscillation forces to the force receiving structure by means of at least one friction damper arranged to receive transverse two-dimensional cable movements, and providing a possibility for a movement of said friction damper in both senses of longitudinal direction of said cable, following corresponding longitudinal movements of said cable, without substantially varying the frictional power of said friction damper, the force of said transverse oscillating movements being transferred to the force receiving structure without play and without slippage.

In preferred embodiments of this method, said possibility for a movement of the friction damper in the longitudinal cable direction is realized in mounting said friction damper between spring elements rigidly connected to the force receiving structure. Furthermore, the basic frictional power of the friction damper may be adjusted by correspondingly adjusting the spring power of the spring elements.

The damper device according to the invention comprises a first friction element rigidly fastened to said cable, preferably in the proximity of its anchorage device, said first friction element extending perpendicularly to said cable. There are furthermore two second friction elements frictionally coacting with said first friction element on both sides of this first element, and oblong spring means. These spring means are fastened at their ends to a supporting substructure that is rigidly connected to said anchorage device or to the force receiving structure. The said spring means typically carry said second friction elements in their middle portion and are prestressed with respect to each other in the axial direction of said cable for resiliently clamping said first friction element between them.

In a preferred embodiment of this damper device, said first friction element comprises a base plate disposed normally to the longitudinal cable axis. It is rigidly fastened to a collar that surrounds said cable and is solidly clamped around the cable. The base plate carries friction plates, one on each of its lower and upper surfaces.

Preferably, the above mentioned second friction elements are essentially cylindrically shaped and are inserted into screw sockets, said screw sockets being screwed into holding blocks which, in turn, are solidly fastened to said arcuated spring means. The holding blocks may comprise recesses for allowing a two-dimensional movement of said friction and base plates of said first friction element.

The above mentioned spring means are preferably semicircular plain spring blades made of a hard, highly resilient material such as high duty spring steel or carbon fiber reinforced synthetic material, or they are made of a plurality of superimposed individual resilient sheets of metal or reinforced synthetics, having no direct contact between them except at the holding block and at the fastening regions where distance elements are arranged between adjacent sheets. It is also possible to use helical springs as it will be described later.

For a correct equilibration of forces, it is preferred that said supporting substructure concentrically surrounds said cable.

Preferably, the damper system of the invention comprises at least two damper devices as described above which are regularly angularly spaced around said cable in the same plane perpendicular to the longitudinal cable axis; two or even more sets of damper devices may be arranged in two or more planes perpendicular to the longitudinal cable axis.

The invention will now further be explained in detail by the description of a preferred embodiment thereof which is shown in the attached drawing.

### BRIEF DESCRIPTION OF THE DRAWING

In the drawing:
FIGURE 1 shows a partly sectioned elevational view of a preferred embodiment of the invention, and
FIGURE 2 shows a partly sectioned plan view of the embodiment according to FIG. 1.

### DETAILED DESCRIPTION OF THE INVENTION

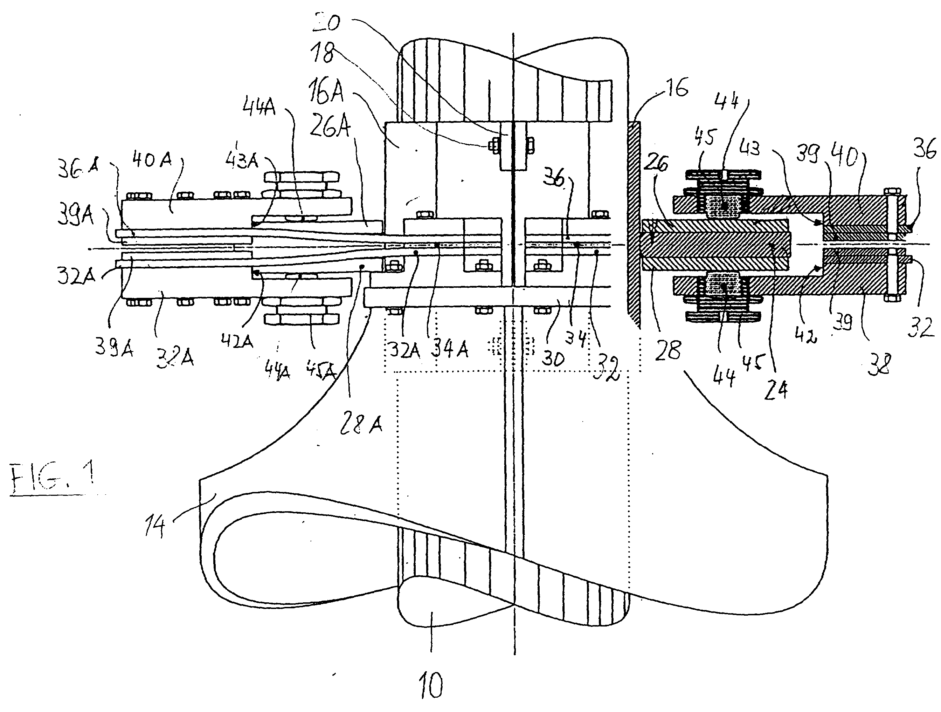

A preferred embodiment of the invention is shown as an elevational view in FIG. 1 wherein the outmost right-hand portion is shown in a vertical section.

In the following description, it is assumed that a cable is disposed in a vertical direction and will oscillate or vibrate horizontally. However, the invention applies without any difference to sloped cables. In these cases, the term "horizontal" in the following description means "normal (perpendicular) to the longitudinal cable axis", and "vertical" means "in the direction of the longitudinal cable axis".

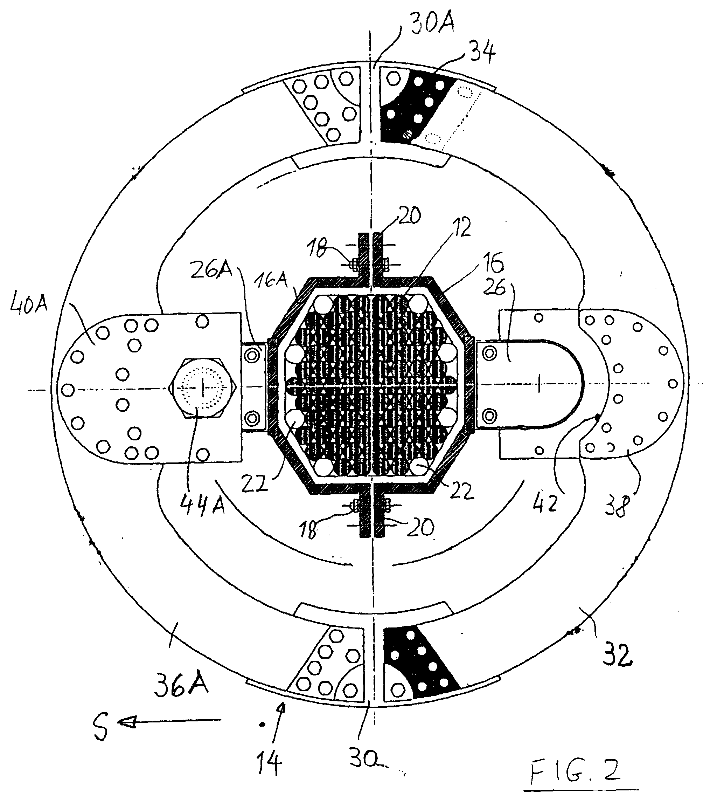

A cable 10, composed of a multitude of individual, bundled cable strands 12 (see FIG. 2), is concentrically surrounded by a supporting substructure 14. The anchorage device of cable 10, situated beneath FIG. 1, is not shown. The substructure 14 forms the force receiving structure. At the site of the damping device, the cable 10 is clamped between two half collars 16, 16A by means of vertical flanges 20 that are bolted together by screws 18. The whole clamping collar formed by the two joined half collars 16, 16A is octagonally shaped; other shapes, for example circular, hexagonal, etc., are also possible. If necessary, dummy strands 22 are inserted in order to fill the space inside the collar 16, 16A for a reliably clamp of the cable 10.

Horizontal base plates 24, 24A (only plate 24 being shown) are welded at diametrically opposed locations, but in the same horizontal plane, to side walls of the collar 16, 16A. Upper friction plates 26, 26A are fastened to the upper surfaces of horizontal base plates 24, 24A, and lower friction plates 28, 28A are fastened to the lower surfaces of the base plates 24, 24A.

The upper end portion of the supporting substructure carries horizontal mounting brackets 30, 30A, diametrically opposed with respect to cable 10 and angularly offset by 90° with respect to the horizontal base plates 24. Two semicircular lower spring blades 32, 32A are fastened on the mounting brackets 30, 30A, and identically shaped semicircular upper spring blades 36, 36A are mounted over the lower spring blades in providing distance plates 34, 34A between the respective lower and upper spring blades on the mountings brackets 30, 30A of the supporting substructure 14. The spring blades are made of a hard, highly resilient material such as spring steel.

At the middle portion of the spring blades, namely facing the above described base plates 24, 24A which carry the upper and lower friction plates 26, 26A; 28, 28A, two pairs of holding blocks 38, 40 (see FIG. 1, at the right) and 38A, 40A (see FIG. 1 at the left) are rigidly bolted to the spring blades 32, 36; 32A and 36A, respectively, in providing counterplates 39, 39A. The holding blocks may also be fastened to the spring blades in another way such as by welding, cementing, etc. The holding blocks 38, 40; 38A, 40A are provided with paired mirror-like opposed recesses 42, 43 and 42A, 43A so that each pair of holding blocks 38, 40 and 38A, 40A forms a fork-like arrangement allowing the entry of base plates 24, 24A with their friction plated mounted thereon.

Friction elements 44, 44A, disposed in screwed hollow sockets 45, 45A are provided at the inner region of each holding plate 38, 40; 38A and 40A in such a manner that the friction elements 44, 44A are in touch with opposed friction plates 26, 28; 26A, 28A and form the friction brakes. Since the vertical distance of superimposed spring plates, e.g. plates 32 and 36, at their middle region (in the region of the holding blocks) is greater than at their fastening sites (namely at the site of the mounting brackets 30, 30A of the substructure 14), the spring blades are deflected, against their inherent resiliency, in this region with respect to each other, thus strongly clamping the base plates 24, 24A of the collar 16, 16A between them. The vertical, mutual distance between each pair of spring blades and thus the frictional force exerted by the friction elements 44, 44A on the coacting friction plates 26, 28; 26A, 28A can be adjusted in screwing the screw sockets 45, 45A more or less into the holding blocks 38, 40; 38A, 40A.

The damping device according to the present invention works as follows.

In its rest position, i.e. in the absence of any cable vibration or oscillation, the cable 10 will be in a defined position within the supporting substructure 14 and the spring blade arrangement 32, 32A; 36, 36A. When a vibration stresses the cable in, say, the direction of arrow S (see FIG. 2), and when the frictional resistance of the four friction brakes 26:44; 28:44; 26A:44A and 28A:44A is reached and finally overcome, the cable will start a lateral displacement against the force of the above described friction brakes. The friction elements 44; 44A are stationary since they are connected to the substructure 14 via the holding blocks 38, 40; 38A, 40A and the spring blades 32, 36; 32A, 36A which are fastened to the substructure 14. The friction plates 26, 28; 26A, 28A are moved to the left in FIG. 2 (arrow S) since they are connected to the collar 16, 16A which in turn is fastened to the cable 10. The movement of the cable 10, hindered by the friction brakes, continues until the maximal lateral displacement is reached. During this period of time, the speed of the lateral movement of the cable has been slowed down by the friction brakes to a most appreciable extent, and the vibration or oscillation of the cable is effectively damped.

The friction brakes will provide the same action when the cable is displaced in any other lateral direction since the friction plates 26, 18; 26A, 28A allow a movement of the friction elements in any horizontal direction.

However, the cable is further subjected to elongation and contraction effects, for example under the influence of cable force variations and temperature changes. Thus, the collar 16, 16A may be displaced not only in a lateral direction but also in a vertical direction. The device of the present invention is able to cope with this vertical movements too without loosing its transmission of forces, free from play and free from slippage, from the cable to the substructure.

When the collar 16, 16A, rigidly fastened to the cable, undergoes a vertical displacement due to a corresponding displacement of the cable portion to which it is fastened, the base plates 24, 24A will follow the same positional changes. When, for example, the collar moves upwards by, say, 5 mm, the upper spring blades 36, 36A will be further bent upwards by 5 mm since this displacement is transmitted by the upper friction plates 26, 26A, the upper friction elements 44, 44A, and the upper holding blocks 40, 40A. Simultaneously, the corresponding lower friction brake elements, including the lower spring blades 32, 32A, will follow the same displacement of 5 mm. The two upper friction brakes will display a greater frictional force than before because the corresponding spring blades are more strongly bent, and the lower friction brakes will be relieved by the same amount due to the lesser flexion of the lower spring blades. The sum of the frictional forces of the upper and lower friction brakes will remain the same. Thus, the overall friction forces are, up to a specified limit, independent on the vertical displacement of the collar.

Fully analog conditions will be observed when the collar 16, 16A is displaced in the downward direction.

The overall frictional forces can be modified not only by the vertical positions of the screw sockets 45, 45A but also by an appropriate selection of the material of the spring blades, which is typically a high duty spring steel, the material of the friction blades 26, 28; 26A, 28A, and the contact surface area of the friction elements 44, 44A.

The overall frictional forces can further be modified by providing more than two friction brake pairs on the circumference of the cable; three, four or six such damper devices or even more may be distributed over this circumference in the same plane, preferably in an angularly regular manner by providing the corresponding number of base plates on the outer surfaces of the collar 16, 16A. It is further possible to mount more than one damper device on one pair of spring blades 32, 32A and 36, 36A over the circumference of the spring blades.

It is of course also possible to mount more than one collar on the cable and to equip this additional collar or collars with the desired number of base plates and friction brakes. Alternatively, it is also possible to equip one collar with several base plates in several levels and in more than one perpendicular plane. A further possibility to modify the action of the dampers is to select another material than spring steel for the spring blades, for example carbon fiber reinforced synthetic materials. The stiffness of the spring blades can further be modified by composing it of two or more superimposed independent thin blades. The stiffness of the spring blades can also be modified by changing its geometry.

The amplitude of a movement of all the above described friction damper systems in the longitudinal direction of the cable can be modified by a more distant mounting of the spring blades. This is achieved by changing the thickness of the base plates 24, 24A and/or the friction plates 26, 28; 26A, 28A.

The damper device and the damper system of the invention are to be used for damping oscillations and vibrations of cable-stayed bridges, suspension bridges, and any other cable supported or guided construction. The dampers of the invention effectively damp transverse movements of the cables in any direction transversely to their longitudinal axis without any play. At the same time, the dampers of the invention cope with displacements of the cable in longitudinal direction, such as elongations and contractions due to temperature and/or cable force variations.

A further advantage of the invention is to provide a device that acts only after the vibrations of the cable have exceeded a specified level, and therefore reduces wear and maintenance.

The idea and the basic principles of this invention may be put into practice by still other devices than that described above. For example, the slip and play free transmission of forces from the moving cable to the rigid substructure may be achieved by friction brakes whose frictional force is provided by torsion rods or by helical springs whose one end is directly fastened to the substructure or to the force receiving structure and whose other end is pushing on the above described friction elements; one spring acting onto the friction blade from above and another one from below. All these other possibilities allow for a reasonable vertical movement of the cable too. The spring blades as described above need not be arcuated but may also be straight blades. The spring blades may be provided with reinforcing elements, etc.

The invention is not limited to the embodiment described above but may be realized, without departing from the spirit of the invention which is defined in the appending claims, by other means within the knowledge of the one skilled in the art.

## Claims

1. A method for damping oscillations and vibrations of a tensioned cable that is anchored to a force receiving structure by an anchorage device, comprising the transmission of transverse cable oscillation forces to said force receiving structure by means of at least one friction damper arranged to receive transverse cable movements, and providing a possibility for a movement of said friction damper in both senses of longitudinal direction of said cable, following corresponding longitudinal movements of said cable, without substantially varying the frictional power of said friction damper, the force of said transverse oscillating movements being transferred to said force receiving structure without play and without slippage, thus effectively damping said cable vibrations and oscillations.

2. The method of claim 1, wherein said friction damper acts only after the cable vibrations and oscillation have exceeded a specified level.

3. The method of claim 1, wherein said possibility for a movement of the friction damper in the longitudinal cable direction is realized in mounting said friction damper between spring elements rigidly connected to the force receiving structure or to said anchorage device.

4. The method of claim 3, wherein the basic frictional power of said friction damper is made adjustable by adjusting the spring power of said spring elements.

5. A damper device for damping oscillations and vibrations of a tensioned cable that is anchored to a force receiving structure by an anchorage device, comprising
a first friction element rigidly fastened to said cable, said first friction element extending perpendicularly to said cable,
two second friction elements frictionally coacting with said first friction element on both sides of this first element, and
spring means, fastened at their ends to a supporting substructure that is rigidly connected to said force receiving structure, said spring means carrying at least one second friction element and being prestressed with respect to each other in the axial direction of said cable for resiliently clamping said first friction element between them.

6. The damper device of claim 5, wherein said first friction element comprises a base plate disposed normally to the longitudinal cable axis and rigidly fastened to a collar that surrounds said cable and is solidly clamped thereto, said base plate carrying friction plates, one on each of its lower and upper surfaces.

7. The damper device of claim 5, wherein said second friction elements are inserted into screw sockets, said screw sockets being screwed into holding blocks which, in turn, are solidly fastened to said spring means.

8. The damper device of claim 7, wherein said holding blocks comprise recesses for allowing any movement of said friction and base plates of said first friction element.

9. The damper device of claim 5, wherein said spring means are made of a hard, highly resilient material such as high duty spring steel or carbon fiber reinforced synthetic material.

10. The damper device of claim 5, wherein said spring means are spring blades made of a plurality of superimposed independent resilient sheets which are not in contact with each other except in the region of said holding blocks and of their fastenings where distance elements are inserted between each adjacent resilient sheets.

11. The damper device of claim 5, wherein said supporting substructure concentrically surrounds said cable.

12. The damper device of claim 5, wherein said friction element is loaded by two helical springs that are rigidly connected to said substructure, one of said helical springs acting from above and the other one from below onto said friction element.

13. A damper system for damping oscillations and vibrations of a tensioned cable that is connected to a force receiving structure by an anchorage device, comprising at least two damper devices according to claim 5, regularly angularly spaced around said cable in the same plane, perpendicular to the longitudinal axis of said cable.

14. The damper system of claim 13, comprising two or more sets of damper devices, arranged in two or more planes perpendicular to the longitudinal axis of said cable, said damper devices comprising one or more independent collars fastened around said cable.
